(19) Europäisches Patentamt / European Patent Office / Office européen des brevets

(11) **EP 3 196 264 B1**

(12) **EUROPEAN PATENT SPECIFICATION**

(45) Date of publication and mention
of the grant of the patent:
**04.11.2020 Bulletin 2020/45**

(51) Int Cl.:
**C09D 201/00** (2006.01)      **C09D 7/40** (2018.01)

(21) Application number: **15842848.2**

(86) International application number:
**PCT/JP2015/061789**

(22) Date of filing: **17.04.2015**

(87) International publication number:
**WO 2016/042824 (24.03.2016 Gazette 2016/12)**

(54) **PAINT COMPOSITION AND PAINTED PRODUCT HAVING COATING FORMED FROM THE PAINT COMPOSITION**

LACKZUSAMMENSETZUNG UND BESCHICHTETES ERZEUGNIS MIT DURCH DIE LACKZUSAMMENSETZUNG GEFORMTER BESCHICHTUNG

COMPOSITION DE PEINTURE ET OBJET REVÊTU AYANT UN REVÊTEMENT FORMÉ PAR LA COMPOSITION DE PEINTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.09.2014 JP 2014191485**

(43) Date of publication of application:
**26.07.2017 Bulletin 2017/30**

(73) Proprietor: **Toyo Aluminium Kabushiki Kaisha**
**Osaka-shi, Osaka 541-0056 (JP)**

(72) Inventors:
• **KURODA, Katsuhiro**
  **Osaka-shi**
  **Osaka 541-0056 (JP)**
• **IKEYA, Akihiko**
  **Osaka-shi**
  **Osaka 541-0056 (JP)**
• **MINAMIOKA, Hiromitsu**
  **Osaka-shi**
  **Osaka 541-0056 (JP)**

(74) Representative: **Bockhorni & Brüntjen**
**Partnerschaft**
**Patentanwälte mbB**
**Elsenheimerstraße 49**
**80687 München (DE)**

(56) References cited:
WO-A1-00/15351             WO-A2-2010/004227
DE-A1-102012 103 903       JP-A- S6 454 070
JP-A- H11 116 861          JP-A- S61 281 168
JP-A- 2001 181 575         JP-A- 2005 239 801
JP-A- 2009 275 096         JP-A- 2011 162 732
JP-A- 2015 086 368         US-B1- 6 366 397

EP 3 196 264 B1

**Description**

TECHNICAL FIELD

The present invention relates to a paint composition and a painted product comprising a coating formed from the paint composition, and more specifically relates to a paint composition containing an aluminum pigment and a mica pigment and a painted product comprising a coating formed from the paint composition.

BACKGROUND ART

A paint composition containing a metal pigment is used in many fields such as automobile exterior, plastic decoration, printing ink, and makeup, since such a paint composition imparts an excellent metallic look when forming a coating. Among metal pigments, an aluminum pigment is widely used because of its characteristics including excellent metallic look, low cost, low specific gravity, and ease of handling.

A paint composition containing a mica pigment is also used in many fields as mentioned above, since such a paint composition imparts an excellent interference look (which may also be expressed as interferential effect or pearl look) derived from the mica pigment when forming a coating. A raw material for the mica pigment may be either natural mica or synthetic mica. The synthetic mica is highly stable in quality and therefore widely used.

Further, in recent years, a paint composition containing an aluminum pigment and a mica pigment has been studied (for example, Japanese Patent Laying-Open No. 2001-181575 (PTD 1) and Japanese Patent Laying-Open No. 2011-162732 (PTD 2)). A coating formed from a paint composition containing both these pigments can impart both the metallic-look color and the interference-look color.

A paint composition comprising an aluminum pigment and a mica pigment is also known from DE 10 2012 103 903 A1, WO 2010/004227 A1, US 6,366,397 B1, or WO 00/15351 A1.

CITATION LIST

PATENT DOCUMENT

> PTD 1: Japanese Patent Laying-Open No. 2001-181575
> PTD 2: Japanese Patent Laying-Open No. 2011-162732

SUMMARY OF INVENTION

TECHNICAL PROBLEM

In the paint composition containing an aluminum pigment and a mica pigment, usually the content of the mica pigment is higher than the content of the aluminum pigment, in order to allow the interference effect of the mica pigment to be strongly exhibited. Particularly in the case where the content of the aluminum pigment is almost equal to or higher than the content of the mica pigment, the interference look imparted by the mica pigment tends to be readily cancelled by the metallic look imparted by the aluminum pigment. Therefore, as disclosed in Examples of PTD 1 and PTD 2 for example, it has been necessary that the mica pigment content be sufficiently higher than the aluminum pigment content, in order to sufficiently produce the interference look of a coating formed from the paint composition containing the aluminum pigment and the mica pigment.

However, increase of the total content of these pigments in the paint composition causes problems of deterioration in applicability of (easiness to apply) the paint composition and/or in performance of the coating after dried. Further, in the case where the mica pigment content is higher than the aluminum pigment content, the lightness (L* value) of the coating may be lower while the interference effect is produced. A reason for this is considered as that the mica pigment of the higher content destroys the metallic look of the aluminum pigment. Moreover, reduction of the amount of the mica pigment to be used is desired, because the mica pigment is relatively expensive.

The present invention has been made in view of the present circumstances as described above, and an object of the present invention is to provide a paint composition containing an aluminum pigment and a mica pigment and a coated product having a coating formed from the paint composition, specifically a paint composition in which the mica pigment content is lower than the conventional one and which is capable of producing a sufficient metallic look and a sufficient interference look, and a painted product having a coating formed from the paint composition.

SOLUTION TO PROBLEM

The paint composition of the present invention is a paint composition containing an aluminum pigment and a mica pigment. A content of the aluminum pigment is higher than a content of the mica pigment. The aluminum pigment has a specific surface area, determined by BET method, of not more than 55000 cm$^2$/g, an average thickness of not less than 0.3 $\mu$m, and an aspect ratio of not more than 50.

Regarding the paint composition of the present invention, a ratio (A)/(B) between the content (A) of the aluminum pigment and the content (B) of the mica pigment is not less than 1.5 and not more than 2.

Regarding the paint composition of the present invention, with respect to 100 parts by mass of the resin solid in the paint composition, the total content of the aluminum pigment and the mica pigment in the paint composition is 5 to 20 parts by mass.

The present invention also relates to a painted product comprising a coating formed from the paint composition.

ADVANTAGEOUS EFFECTS OF INVENTION

The paint composition as well as the painted product comprising a coating formed from the paint composition have a lower mica pigment content than an aluminum pigment content, as compared with conventional paint compositions, and are capable of producing a sufficient metallic look and a sufficient interference look.

DESCRIPTION OF EMBODIMENTS

In the following, a paint composition of the present invention and a painted product of the present invention having a coating formed from the paint composition will be described in further detail.

<<Paint Composition>>

A paint composition of the present invention contains an aluminum pigment and a mica pigment. The aluminum pigment and the mica pigment are contained in order to allow a coating formed by applying the paint composition to show both the metallic-look color produced by the aluminum pigment and the interference-look color produced by the mica pigment.

"Metallic look" herein refers to a high-luminance color like glittering metal luster, and is visually recognized. "Interference look" herein refers to an appearance with its hue varying depending on the angle of observer's view, and is also visually recognized.

<Aluminum Pigment>

The aluminum pigment contained in the paint composition of the present invention has a specific surface area, determined by the BET method, of not more than 55000 cm$^2$/g, an average thickness of not less than 0.3 $\mu$m, and an aspect ratio (average grain size in $\mu$m/average thickness in $\mu$m) of not more than 50. While the shape of the aluminum pigment is not particularly limited, the aluminum pigment is preferably in the shape of flakes in order to allow the paint composition to produce a more excellent metallic look.

The average thickness of the aluminum pigment can be determined in the following way. Specifically, the water covering area A (cm$^2$/g) of the aluminum pigment is measured in accordance with JIS-K5906 (1998) and the aluminum density B (g/cm$^3$) is further measured. These measurement values can be entered into the following formula (1) to determine the average thickness C ($\mu$m) of the aluminum pigment.

$$C\ (\mu m) = 10000 \, / \, [A\ (cm^2/g) \times B\ (g/cm^3)] \quad \dots (1)$$

(As to the above formula (1), a film having the water covering area is supposed to be a single film, and the average thickness of the aluminum pigment which forms the film is determined from the relation between the water covering area and the specific gravity.)

Such an aluminum pigment is obtained by grinding or milling aluminum powder which is a raw material for the pigment by means of a grinding aid such as fatty acid in the presence of a grinding medium in a mill such as ball mill or attritor mill for example. The aluminum pigment may also be obtained by crushing an aluminum-vapor-deposition foil made up of a film and aluminum which is vapor-deposited on the film. As the aforementioned grinding medium, a mineral oil with a high flash point such as mineral spirits, solvent naphtha, or the like may be used.

As to the makeup of the aluminum pigment, the aluminum pigment may be composed of aluminum only or composed of an aluminum-based alloy, and the purity of aluminum is not particularly limited. Moreover, the surface of the aluminum pigment may be surface-treated to have a metal oxide coating for improving the corrosion resistance and/or design.

The average grain size of the aluminum pigment is not particularly limited. As to the lower limit of the average grain size, the average grain size is preferably not less than 1 μm, more preferably not less than 7 μm, and still more preferably not less than 10 μm. As to the upper limit of the average grain size, the average grain size is preferably not more than 100 μm, more preferably not more than 30 μm, and still more preferably not more than 25 μm. The aluminum pigment having an average grain size of not less than 1 μm is easy to handle in manufacture, tends to be less likely to agglomerate, and can therefore be dispersed uniformly in the paint composition. The aluminum pigment having an average grain size of not more than 100 μm enables prevention of roughening of the coating surface and thereby enables a desired design to be implemented.

The average grain size herein refers to a volume average grain size which can be determined by calculating the volume average from a grain size distribution measured by the laser diffraction method.

<Mica Pigment>

The mica pigment contained in the paint composition of the present invention is not particularly limited, and may be composed of either natural mica or synthetic mica or composed of a mixture of natural mica and synthetic mica. The mica pigment is preferably pearl mica formed by coating the surface of mica with a thin film of a metal oxide such as titanium dioxide, iron oxide, cobalt, tin, or zirconium. The mica pigment is preferably in the shape of flakes. In this case, any given amount of the mica pigment and any given amount of the aluminum pigment contained at a specific ratio in the paint composition can be arranged relatively uniformly in the coating, and therefore, the mica pigment and the aluminum pigment can impart a design having both the interference look and the luminous look derived from respective characteristics of the mica pigment and the aluminum pigment.

An example of such a mica pigment may for example be a mica pigment produced by processing natural mica. An example of such a mica pigment may alternatively be a synthetic mica pigment synthesized by a solid phase reaction, melting, or the like or a synthetic mica on which various treatments are performed after the synthesis. Such an artificially synthesized mica pigment is currently used widely.

The average grain size of the mica pigment is not particularly limited. As to the lower limit, the average grain size is preferably not less than 5 μm and more preferably not less than 8 μm. As to the upper limit, the average grain size is preferably not more than 30 μm and more preferably not more than 25 μm. A mica pigment having an average grain size of not less than 5 μm is easy to handle in manufacture, tends to be less likely to agglomerate, and can therefore be dispersed uniformly in the paint composition. A mica pigment having an average grain size of not more than 30 μm enables prevention of roughening of the coating surface and thereby enables a desired design to be implemented. The average grain size of the mica pigment can also be determined by the laser diffraction method, like the aluminum pigment.

<Other Components>

The paint composition of the present invention may contain any other components as long as the paint composition contains the above-described aluminum pigment and the above-described mica pigment. The other components may for example be another pigment, additives, resin, solvent, and the like.

The other pigment may for example be a coloring pigment such as organic coloring pigment, inorganic coloring pigment, extender, plate-like iron oxide, or the like. The additives may for example be pigment dispersant, antifoaming agent, antisettling agent, curing catalyst, and the like. The resin may for example be epoxy resin, polyester resin, alkyd resin, acrylic resin, acrylic silicone resin, vinyl resin, silicon resin (inorganic binder), polyamide resin, polyamideimide resin, melamine resin, fluorine resin, synthetic resin emulsion, boiled oil, chlorinated rubber, natural resin, amino resin, phenol resin, polyisocyanate resin, or the like. The solvent may for example be an organic solvent such as alcohol-based solvent, glycol-based solvent, ketone-based solvent, ester-based solvent, ether-based solvent, aromatic-based solvent, hydrocarbon-based solvent, water, or the like.

<Makeup of Components>

In the paint composition of the present invention, the content (A) of the aluminum pigment is higher than the content (B) of the mica pigment. The content in the paint composition herein refers to parts by mass of each component with respect to 100 parts by mass of a resin solid in the paint composition.

Further, with respect to 100 parts by mass of the resin solid in the paint composition, the content (A) of the aluminum pigment in the paint composition is preferably not less than 0.1 part by mass and not more than 30 parts by mass, and more preferably not less than 1 part by mass and not more than 20 parts by mass, and the content (B) of the mica pigment in the paint composition is preferably not less than 0.1 part by mass and not more than 20 parts by mass, and more preferably not less than 1 part by mass and not more than 15 parts by mass. In the paint composition, the ratio (A)/(B) between the aluminum pigment content (A) and the mica pigment content (B) is not less than 1.5.

With respect to 100 parts by mass of the resin solid in the paint composition, the total content of the aluminum pigment and the mica pigment in the paint composition is 5 to 20 parts by mass. A total content of not less than 1 part by mass in the paint composition enables a coating to have a color tone derived from these pigments. A total content of not more than 30 parts by mass enables prevention of roughening of the coating surface of the paint composition and thereby enables an intended design to be implemented.

Moreover, with respect to 100 parts by mass of the resin solid in the paint composition, the content of the additive(s) in the paint composition is preferably 0.1 to 10 parts by mass, the resin content therein is preferably 5 to 50 parts by mass, and the solvent content therein is preferably 40 to 80 parts by mass. If the paint composition contains any pigment other than the aluminum pigment and the mica pigment, the total content of all these pigments in the paint composition is preferably not less than 0.2 parts by mass and not more than 40 parts by mass, more preferably not less than 0.5 parts by mass and not more than 35 parts by mass, and still more preferably not less than 1 part by mass and not more than 25 parts by mass.

<Effects>

As described above, the paint composition of the present invention is a paint composition containing an aluminum pigment and a mica pigment, the aluminum pigment content (A) is higher than the mica pigment content (B), and the aluminum pigment has a specific surface area, determined by the BET method, of not more than 55000 $cm^2/g$, an average thickness of not less than 0.3 $\mu$m, and an aspect ratio of not more than 50. The aluminum pigment content is higher than the mica pigment content.

In order for the conventional paint composition to sufficiently produce both the metallic-look color of the aluminum pigment and the interference-look color of the mica pigment, it has been necessary to have a sufficient content of the aluminum pigment and further have a still higher mica pigment content than the aluminum pigment content.

In contrast, in the paint composition of the present invention, the aluminum pigment content (A) is higher than the mica pigment content (B). Namely, the mica pigment content (B) is lower than the aluminum pigment content (A). Thus, regardless of the fact that the mica pigment content with respect to the aluminum pigment content is lower in the paint composition of the present invention than the conventional one, the paint composition of the present invention can produce a sufficient metallic look and a sufficient interference look when forming a coating. Therefore, as compared with the conventional paint composition, the paint composition of the present invention enables a design equivalent to or more than the conventional one while the mica pigment content of the present invention is lower than the conventional one. Accordingly, an intended color tone can be produced, deterioration of the applicability of the paint composition due to increase of the total content of the pigments in the paint composition can be suppressed, and the manufacturing cost can be reduced.

It is not clear why the interference look shown by the coating is weakened when the specific surface area of the aluminum pigment in the paint composition is more than 55000 $cm^2/g$. The reason, however, is considered as that an excessively large specific surface area is accompanied by relative increase of the number of aluminum flakes contained as the aluminum pigment in the paint composition, and therefore the interference look of the mica pigment is weakened. When the aluminum pigment has an average thickness of less than 0.3 $\mu$m and an aspect ratio of more than 50, namely the aluminum flakes are thin and flat in shape, the aluminum pigment is likely to float in the paint composition and this positional relation is transferred into the coating, and consequently the interference look of the mica pigment is weakened.

In the paint composition of the present invention, preferably the aluminum pigment has a specific surface area, determined by the BET method, of not less than 10000 $cm^2/g$, an average thickness of not more than 1 $\mu$m, and an aspect ratio of not less than 1. In this case, the paint composition can more reliably produce a sufficient metallic look and a sufficient interference look. More preferably, the aluminum pigment has a specific surface area of not less than 20000 $cm^2/g$ and not more than 50000 $cm^2/g$, an average thickness of not less than 0.1 $\mu$m and not more than 1.0 $\mu$m, and an aspect ratio of not less than 1 and not more than 50. Still more preferably, the aluminum pigment has a specific surface area of not less than 30000 $cm^2/g$ and not more than 50000 $cm^2/g$, an average thickness of not less than 0.2 $\mu$m and not more than 0.6 $\mu$m, and an aspect ratio of not less than 15 and not more than 45.

In the paint composition of the present invention, with respect to 100 parts by mass of the resin solid in the paint composition, the aluminum pigment content (A) is preferably not less than 0.1 part by mass and not more than 30 parts by mass, and more preferably not less than 1 part by mass and not more than 20 parts by mass, and the mica pigment content (B) is preferably not less than 0.1 part by mass and not more than 20 parts by mass, and more preferably not less than 1 part by mass and not more than 15 parts by mass. In this case, a sufficient metallic look and a sufficient interference look can be produced. In addition, since the aluminum pigment content (A) and the mica pigment content (B) in the paint composition are sufficiently low, deterioration of the applicability can further be suppressed and the manufacturing cost can further be reduced.

If in a paint composition, the ratio (A)/(B) between the aluminum pigment content (A) and the mica pigment content (B) is at least 1, then, a sufficient metallic look and a sufficient interference look can be produced. If the aluminum pigment content is constant, however, increase of the mica pigment content is accompanied by increase of the cost. In terms of such a cost, it is desirable to reduce the mica pigment content to the extent that does not hinder the interference look from being produced. Therefore, in terms of reduction of the cost, the ratio (A)/(B) is not less than 1.5 and more preferably not less than 2. Meanwhile, in order to more efficiently produce the metallic look and the interference look, the ratio (A)/(B) is not more than 2. Moreover, in terms of both these respects, the content (A)/(B) is not less than 1.5 and not more than 2.

In the paint composition of the present invention, grain sizes in the aluminum pigment preferably fall in a small range. Specifically, a value determined by subtracting the diameter at 10% ($D_{10}$) from the diameter at 90% ($D_{90}$) in the volume cumulative grain size distribution is preferably not more than 25 $\mu$m and more preferably not more than 15 $\mu$m. In this case, even when the mica pigment content is reduced, a high metallic look and a high interference look can be exhibited.

<<Painted Product>>

The present invention also relates to a painted product having a coating formed from the above-described paint composition. The paint composition is able to produce a sufficient metallic look and a sufficient interference look when forming a coating, regardless of the fact that the mica pigment content relative to the aluminum pigment content is lower than the conventional one, as described above. The painted product having this coating can therefore show a sufficient metallic look and a sufficient interference look.

As to a substrate on which the coating is formed, the material for the substrate is not particularly limited and may be metal, plastic, ceramic product, glass, wood, concrete, cloth, paper, or the like. The shape of the substrate is also not particularly limited, and the substrate to be used may be a three-dimensional structure such as strut, bridge, guardrail, fastening part (such as bolt, nut, rivet), sliding part (such as seat belt part, machine tool part), pedestal (such as pedestal for a solar power generation panel), tank, vehicle, outdoor box (such as cubicle), or may be a flat structure such as precoated metal, plate-like material, wall material, roof material, sheet, or the like, for example. As to the method of applying the paint composition of the present invention, the method is not particularly limited to the conventionally known application method and any method may be used.

Whether the coating of the painted product is the coating of the present invention or not can be confirmed by calculating the aluminum pigment content and the mica pigment content in the coating and examining characteristics of the aluminum pigment. Namely, when the aluminum pigment content in the coating is higher than the mica pigment content and the aluminum pigment has a specific surface area, determined by the BET method, of not more than 55000 $cm^2$/g, an average thickness of not less than 0.3 $\mu$m, and an aspect ratio of not more than 50, a ratio A/B between the content A of the aluminum pigment and the content B of the mica pigment being not less than 1.5 and not more than 2, with respect to 100 parts by mass of the resin solid in the paint composition, the total content of the aluminum pigment and the mica pigment in the paint composition being 5 to 20 parts by mass, the coating can be identified as the coating formed from the paint composition of the present invention.

As long as the painted product of the present invention has the above-described coating, the painted product may have another layer. Preferably, the painted product has this coating as a base and has a top coating on the base. In the case where the painted product has the top coating, damage to the coating can be suppressed and the design imparted by the coating can be improved. The other layer may for example be an underlying treatment layer between the coating and the substrate. In the case where the painted product has the underlying treatment layer, the adhesion between the substrate and the coating can be increased.

Examples of the underlying treatment layer may for example be hot dipping layer, thermal spraying layer, electrolytic plating layer, non-electrolytic plating layer, vapor deposition layer, chemical conversion treatment layer, electropainting layer, organic-based primer layer, zinc-rich primer layer, and the like. In particular, hot-dip galvanizing layer, electrolytic zinc plating layer, chemical conversion treatment layer for which inorganic salt is used, and organic-based primer layer are preferred. Examples of a particularly preferred underlying treatment layer may be hot-dip galvanizing, electrogalvanizing chemical conversion treatment for which inorganic salt is used, organic-based primer, and the like. In the case where any of various plating layers is selected as the underlying treatment layer, an organic-based primer layer is preferably used in combination with the plating layer.

EXAMPLES

In the following Examples and Comparative Examples, an aluminum pigment and a mica pigment were prepared, and a paint composition containing a predetermined amount of the aluminum pigment and a predetermined amount of the mica pigment was produced. The produced paint composition was applied onto a substrate, and a top coating material was further applied. Then, they were baked to produce a painted product having a coating formed from the paint composition. The color tone of each coating of each painted product was measured to confirm the metallic look and the interference look exhibited by the coating.

<Preparation of Aluminum Pigment>

Aluminum pigments A to D having the characteristics shown Table 1 were prepared. In Table 1, $D_{10}$, $D_{50}$, and $D_{90}$ represent respective grain sizes ($\mu$m) at 10%, 50%, and 90% of the volume average grain size in a volume cumulative grain size distribution curve. The volume average grain size was measured with a laser diffraction/scattering grain size distribution meter (trademark: "Microtrac HRA 9320-X100 manufactured by Honeywell). For example, $D_{90}$ refers to the grain size ($\mu$m) at frequency 50% in the volume cumulative grain size distribution curve in a graph having a vertical axis representing the frequency (%) and the horizontal axis representing the grain size ($\mu$m). "$(D_{90})$-$(D_{10})$" refers to a value determined by subtracting the grain size of $D_{10}$ from the grain size of $D_{90}$. As this value is smaller, the range of grain sizes in the aluminum pigment is smaller. The specific surface area refers to the specific surface area calculated by the BET method.

Table 1

|  | $D_{10}$ ($\mu$m) | $D_{50}$ ($\mu$m) | $D_{90}$ ($\mu$m) | $(D_{90})$-$(D_{10})$ ($\mu$m) | specific surface area (cm$^2$/g) | average thickness ($\mu$m) | aspect ratio |
|---|---|---|---|---|---|---|---|
| aluminum pigment A | 5 | 14 | 30 | 25 | 50000 | 0.31 | 44.5 |
| aluminum pigment B | 7 | 13 | 22 | 15 | 45000 | 0.36 | 36.5 |
| aluminum pigment C | 3 | 9 | 23 | 20 | 92000 | 0.18 | 49.6 |
| aluminum pigment D | 7 | 17 | 29 | 21 | 60000 | 0.27 | 63.1 |

<Preparation of Mica Pigment>

As mica pigment E, a mica pigment with a gold interference color (trademark: "Mearlin(R) Exterior CFS Super Gold 2303Z", grain size: 7 to 30 $\mu$m) was prepared. As mica pigment F, a mica pigment with a blue interference color (trademark: "Mearlin(R) Exterior CFS Super Blue 6303Z, grain size: 9 to 35 $\mu$m) was prepared. Mica pigment E produces a gold interference look while mica pigment F produces a blue interference look.

<Preparation of Top Coating Material>

Initially, 420 parts by mass of an acrylic clear resin (trademark: "ACRYDIC A-322" manufactured by DIC corporation) and 165 parts by mass of melamine clear resin (trademark: "SUPER BECKAMINE L117-60" manufactured by DIC corporation) were added to 228 parts by mass of an aromatic-based solvent (trademark: "Solvesso 100" manufactured by Exxon Chemical). They were dispersed with a glass stick, and thereafter the aromatic-based solvent was further added. The viscosity was adjusted by means of a Ford cup so that the time was 20 seconds. A top coating material was thus prepared.

<Example 1>

Aluminum pigment A and mica pigment E were added respectively to 200 parts by mass of thinner and 60 parts by mass of xylene so that aluminum pigment A and mica pigment E were each 11 parts by mass (amount of the solid pigment) with respect to 100 parts by mass of a resin solid in a paint composition. They were dispersed with a glass stick. After this, together with 160 parts by mass of an acrylic clear resin (trademark: "ACRYDIC A-322" manufactured by DIC corporation) (constituting 80 parts by mass of the solid resin) and 33.3 parts by mass of a melamine clear resin (trademark: "SUPER BECKAMINE L117-60" manufactured by DIC corporation) (constituting 20 parts by mass of the

**EP 3 196 264 B1**

solid resin), they were agitated and dispersed at 1000 rpm for 15 minutes by means of a disper. In this way, a paint composition precursor was obtained. To the obtained paint composition precursor, thinner was added, and the viscosity was adjusted by means of a Ford cup so that the time was 13.5 seconds. In this way, the paint composition was prepared.

The paint composition (base) and the top coating material (top) were applied onto a steel sheet as a substrate, by means of an automatic spray gun under the conditions of the application in the following. After applied, they were baked under the conditions that the temperature was 140°C and the time was 20 minutes. Thus, a coating formed from each paint composition was produced on the steel sheet. The thickness of each coating (including the top coating) was 40.0 μm to 60.0 μm.

Conditions of Application

Reciprocator speed: 50 m/min
Reciprocator stroke: 1250 mm
Conveyor speed: 2 m/min
Spray distance: 30 cm
Feed (base): 400 ml/min
Feed (top): 420 ml/min
The number of passes for the same paint (base): 3 passes
The number of passes for the same paint (top): 2 passes
Gun standby time: 5 minutes
Standby time between passes for the same gun: 2 minutes

<Examples 2 to 6, Conventional Examples 1 to 4, Comparative Examples 1, 2>

Except that the type and the content of the aluminum pigment to be used and the type and the content of the mica pigment to be used were changed to the values shown in Table 2, a similar method to Example 1 was used to obtain coatings of respective Examples, Conventional Examples, and Comparative Examples. Each content is the solid content (parts by mass) (PHR) of each pigment with respect to 100 parts by mass of the solid resin in the paint composition. In Table 2, "aluminum pigment/mica pigment (ratio)" is the ratio (A/B) between the aluminum pigment content (A) and the mica pigment content (B) in the paint composition.

Table 2

| | aluminum pigment | | mica pigment | | aluminum pigment/ mica pigment (ratio) | L*15 | b*15 |
|---|---|---|---|---|---|---|---|
| | type | content (PHR) | type | content (PHR) | | | |
| Example 1* | A | 11 | E | 11 | 1 | 122.5 | 7.2 |
| Example 2 | A | 11 | E | 5.5 | 2 | 121.4 | 3.5 |
| Example 3 | A | 11 | F | 5.5 | 2 | 119.4 | -4.7 |
| Example 4* | B | 11 | E | 11 | 1 | 140.8 | 4.5 |
| Example 5 | B | 11 | F | 5.5 | 2 | 140.8 | -4.7 |
| Example 6 | A | 11 | E | 7.3 | 1.5 | 120.9 | 3.6 |
| Conventional Example 1 | c | 11 | E | 16.5 | 0.67 | 113.0 | 6.6 |
| Conventional Example 2 | D | 11 | E | 16.5 | 0.67 | 141.6 | 4.7 |
| Conventional Example 3 | A | 11 | E | 16.5 | 0.67 | 123.2 | 8.6 |
| Conventional Example 4 | B | 11 | E | 16.5 | 0.67 | 142.7 | 5.5 |
| Comparative Example 1 | C | 11 | E | 11 | 1 | 113.7 | 3.6 |

8

(continued)

| | aluminum pigment | | mica pigment | | aluminum pigment/ mica pigment (ratio) | L*15 | b*15 |
|---|---|---|---|---|---|---|---|
| | type | content (PHR) | type | content (PHR) | | | |
| Comparative Example 2 | D | 11 | F | 11 | 1 | 141.0 | -4.8 |
| *not according to the invention | | | | | | | |

<Measurement of Color Tone>

For the coatings thus formed, L*15 and b*15 defined under JIS-Z8729 (2004) (Colour specification - CIELAB and CIELUV colour spaces) were obtained from a Y value measured in accordance with the method defined by condition "a" under JIS-Z8722 (2009) (Methods of color measurement - Reflecting and transmitting objects). Specifically, a multi-angle spectrophotometer (trademark: "X-Rite MA-68II" manufactured by X-Rite Inc.) was used to measure the L* value and the b* value at an incident angle of 45° and an offset angle of 15° from the direction of regular reflection. The results are shown in Table 2.

The L* value represents lightness and serves as an indicator of the degree of the metallic look produced by the aluminum pigment contained in the paint composition. As the L* value is larger, the color can be regarded as a stronger metallic-look color. The b* value represents the degree of interference. As the negative b* value is larger, the color can be regarded as a stronger bluish interference color. As the positive b* value is larger, the color can be regarded as a stronger yellowish interference color. Namely, as the absolute value of the b* value is larger, the degree of interference is higher.

Referring to Table 2, as to the paint compositions of Examples 1 and 4, which are not Examples of the invention, the aluminum pigment content is equivalent to the mica pigment content. In contrast, as to respective paint compositions used for Conventional Examples 1 to 4, the aluminum pigment content is lower than the mica pigment content. As to Conventional Example 3 for which the same aluminum pigment is used as Example 1, the mica pigment content is higher than Example 1 and therefore the degree of interference is higher than Example 1. Likewise, as to Conventional Example 4 for which the same aluminum pigment as Example 4 is used, the mica pigment content is higher than Example 4 and therefore the degree of interference is higher than Example 4. These results are derived naturally. However, as to a comparison between Example 1 and Conventional Example 1 and a comparison between Example 4 and Conventional Example 2, although Example 1 is higher in lightness than Conventional Example 1, Example 1 is also sufficiently higher in degree of interference than Conventional Example 1, and Example 4 is not significantly different from Conventional Example 2 in terms of both the lightness and the degree of interference.

It was accordingly confirmed that while the paint compositions of Examples 1 and 4 had a lower mica pigment content relative to the paint compositions of Conventional Examples 1 and 2, the former paint compositions were capable of producing a sufficiently high metallic look and a sufficiently high interference look. Moreover, the paint compositions of Examples 1 and 4 were lower in the total content of the contained pigments relative to that of the paint compositions of Conventional Examples 1 and 2.

As to the paint compositions of Examples 2, 3, 5, and 6, the aluminum pigment content of Examples 2, 3, and 5 is twice as high as the mica pigment content, and the aluminum pigment content of Example 6 is 1.5 times as high as the mica pigment content. In contrast, as to each of the paint compositions of Comparative Examples 1 and 2, the aluminum pigment content is equivalent to the mica pigment content. As to Examples 2, 3, and 6, although the lightness is higher than that of Comparative Example 1, the degree of interference of Examples 2, 3, and 6 is not significantly different from or is slightly higher than that of Comparative Example 1. As to Example 5 as well, the lightness and the degree of interference are not significantly different from those of Comparative Example 2.

It was accordingly confirmed that the paint compositions of Examples 2, 3, 5, and 6 could produce a sufficiently high metallic look and a sufficiently high interference look, regardless of the fact that the mica pigment content was lower relative to the paint compositions of Comparative Examples 1 and 2. Moreover, the paint compositions of Examples 2, 3, 5, and 6 are lower in total content of the contained pigments, relative to the paint compositions of Comparative Examples 1 and 2.

Moreover, from a comparison between the paint compositions of Example 4 and Example 5 and the paint compositions of Conventional Example 2 and Comparative Example 2, respectively, it was confirmed that the paint compositions of Examples 4 and 5 could produce a high lightness and a high interference look equivalent to those of Conventional Example 2 and Comparative Example 2, regardless of the fact that Example 4 was lower in mica pigment content than Conventional Example 2 and Example 5 was lower in mica pigment than Comparative Example 2.

It should be construed that the embodiments and examples disclosed herein are given by way of illustration in all respects, not by way of limitation.

## Claims

1.  A paint composition comprising an aluminum pigment and a mica pigment,
    a content of the aluminum pigment being higher than a content of the mica pigment,
    the aluminum pigment having a specific surface area, determined by BET method, of not more than 55000 cm$^2$/g, an average thickness of not less than 0.3 $\mu$m, and an aspect ratio of not more than 50, wherein
    a ratio A/B between the content A of the aluminum pigment and the content B of the mica pigment is not less than 1.5 and not more than 2,
    with respect to 100 parts by mass of the resin solid in the paint composition, the total content of the aluminum pigment and the mica pigment in the paint composition is 5 to 20 parts by mass.

2.  A painted product comprising a coating formed from a paint composition as recited in claim 1.

## Patentansprüche

1.  Lackzusammensetzung, umfassend ein Aluminiumpigment und ein Glimmerelement,
    wobei ein Gehalt des Aluminiumpigments höher als ein Gehalt des Glimmerelements ist,
    wobei das Aluminiumpigment einen spezifischen, durch BET-Verfahren bestimmten Oberflächenbereich von nicht mehr als 55.000 cm$^2$/g, eine Durchschnittsdicke von nicht weniger als 0,3 $\mu$m sowie ein Aspektverhältnis von nicht mehr als 50 aufweist, wobei
    ein Verhältnis A/B zwischen dem Gehalt A des Aluminiumpigments und dem Gehalt B des Glimmerelements nicht geringer als 1,5 sowie nicht mehr als 2 ist,
    in Bezug auf 100 Masseteile des in der Lackzusammensetzung festen Harzes beträgt der Gesamtgehalt des Aluminiumpigments und des Glimmerelements in der Lackzusammensetzung 5 bis 20 Masseteile.

2.  Lackiertes Produkt, umfassend eine aus einer Lackzusammensetzung nach Anspruch 1 gebildete Beschichtung.

## Revendications

1.  Composition de peinture comprenant un pigment d'aluminium et un pigment de mica, une teneur en pigment d'aluminium étant supérieure à une teneur en pigment de mica, le pigment d'aluminium ayant une aire spécifique, déterminée par la méthode BET, inférieure ou égale à 55 000 cm$^2$/g, une épaisseur moyenne supérieure ou égale à 0,3 $\mu$m, et un rapport de forme inférieur ou égal à 50, dans laquelle :

    un rapport A/B entre la teneur A en pigment d'aluminium et la teneur B en pigment de mica est supérieur ou égal à 1,5 et inférieur ou égal à 2,
    par rapport à 100 parties en masse de résine solide dans la composition de peinture, la teneur totale en pigment d'aluminium et en pigment de mica de la composition de peinture est de 5 à 20 parties en masse.

2.  Produit peint comprenant un revêtement formé à partir d'une composition de peinture telle qu'énoncée dans la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001181575 A
- JP 2011162732 A
- DE 102012103903 A1
- WO 2010004227 A1
- US 6366397 B1
- WO 0015351 A1